# EUROPÄISCHE PATENTSCHRIFT

(11) **EP 2 168 709 B1**
(45) Veröffentlichungstag und Bekanntmachung des Hinweises auf die Patenterteilung: **15.02.2017**
(21) Anmeldenummer: 09166555.4
(22) Anmeldetag: 28.07.2009
(51) Int. Cl.: B23K 26/10, B23K 26/14, B23K 26/28

(54) **Verfahren und Vorrichtung zum Laserschweissen eines rotationssymetrischen Werkstücks**
Method and device for welding a rotation-symmetric workpiece with a laser beam
Procédé et dispositif de soudage d'une pièce à usiner à rotation symétrique à l'aide d'un rayon laser

(30) Priorität: 25.09.2008 DE 102008042343
(43) Veröffentlichungstag der Anmeldung: 31.03.2010
(73) Patentinhaber: Robert Bosch GmbH, 70442 Stuttgart (DE)
(72) Erfinder: Leimser, Markus, 73635, Rudersberg-Steinenberg (DE); Ohmle, Thomas, 89077, Ulm (DE); Radtke, Joachim, 71691, Freiberg (DE); Ramsayer, Reiner, 71701, Schwieberdingen (DE); Kittel, Sonja, 70372, Stuttgart (DE)

(56) Entgegenhaltungen:
- WO-A1-01/27574
- JP-A- 62 089 593
- US-A- 4 456 811
- US-A- 5 993 549
- US-A1- 2006 043 622

## Beschreibung

Die vorliegende Erfindung betrifft eine Vorrichtung gemäß dem Oberbegriff des Anspruchs 1, zum Bearbeiten von rotationssymmetrischen Werkstücken mit einem Laserstrahl, sowie ein Verfahren zum Bearbeiten von rotationssymmetrischen Werkstücken.

### Stand der Technik

Aus dem Stand der Technik sind Vorrichtungen zum Schweißen von radialen Werkstücken bekannt, bei denen spezielle Optiken und Scanner, sowie Kombinationen aus einem stehenden oder bewegten Werkstück und/oder stehenden oder bewegten Laserstrahl verwendet werden.

So ist beispielsweise aus der DE 10 2005 000 631 A1 eine Vorrichtung zum Schweißen von rotationssymmetrischen Werkstücken mit einem gepulsten Laserstrahl bekannt, bei der das Werkstück ortsfest fixiert ist und lediglich der Laserstrahl bewegt wird. Dabei erweist es sich als nachteilig, dass während der Bearbeitung Materialspritzer und/oder Rauch auf die Umlenkeinheit gelangen können, dadurch eine Teilabsorption der Laserstrahlung erfolgt, wodurch einerseits die Intensitätsverteilung des Laserstrahls auf dem zu bearbeitenden Werkstück variiert und andererseits die Umlenkeinheit unerwünscht aufgeheizt wird.

US 4 456 811 offenbart ein Vorrichtung zum Laserschweißen gemäß dem Oberbegriff des Anspruchs 1 sowie ein Verfahren zum Laserschweißen eines rotationssymetrischen Werkstücks mit einem Laserstrahl mittels einer Vorrichtung gemäß dem Oberbegriff des Anspruchs 1, bei dem der Laserstrahl auf seinem optischen Weg zum Werkstück mindestens eine Umlenkeinrichtung durchläuft, wobei die Umlenkeinrichtung im Wesentlichen in einer Ebene senkrecht zu der Rotationssymetrieachse des Werkstücks und ringförmig um das Werkstück herum läuft, wobei der Laserstrahl als kontinuirlicher Laserstrahl ausgebildet werden kann.

### Offenbarung der Erfindung

Es ist die Aufgabe der Erfindung, ein Verfahren gemäß Anspruch 18 sowie eine Vorrichtung gemäß Anspruch 1 zum Bearbeiten von rotationssymmetrischen Werkstücken mit einem Laserstrahl zur Verfügung zu stellen, mit deren Hilfe die genannten Nachteile verhindert bzw. verzögert werden.

Die Lösung der Aufgabe erfolgt erfindungsgemäß durch eine Vorrichtung mit den kennzeichnenden Merkmalen des Anspruchs 1 sowie ein Verfahren mit den kennzeichnenden Merkmalen des Anspruchs 18. Bevorzugte Ausgestaltungen der Erfindung sind in den Unteransprüchen angegeben.

Die erfindungsgemäße Vorrichtung zum Bearbeiten und/oder Schweißen eines rotationssymmetrischen Werkstücks weist einen Laserstrahl auf, der auf seinem optischen Weg zum Werkstück mindestens eine Umlenkeinrichtung durchläuft, wobei die Umlenkeinrichtung im Wesentlichen in einer Ebene senkrecht zu der Rotationssymmetrieachse des Werkstücks und ringförmig um das Werkstück herum verläuft. Erfindungsgemäß wird vorgeschlagen, dass in den Bereich zwischen der Umlenkeinheit und dem Werkstück eine Gasströmung zugeführt wird. Auf diese Weise kann gewährleistet werden, dass Schmutzpartikel und/oder Rauch, die während der Bearbeitung entstehen, weggeblasen werden und somit nicht auf die Umlenkeinheit gelangen können.

Dabei ist die Gasströmung vorzugsweise über mindestens einen Gaszufuhrkanal zuführbar. Vorteilhaft kann die Gasströmung in variablen Strömungswinkeln aus dem Gaszufuhrkanal austreten, wobei sich in einer besonders bevorzugten Ausführungsform der Gaszufuhrkanal in Strömungsrichtung aufweitet und/oder geneigt ist. Ferner ist es möglich, dass der Gaszufuhrkanal individuell und über den Umfang der Umlenkeinheit verteilt sowohl offene Teilbereiche als auch geschlossene Teilbereiche aufweist, so dass die Gaszuführung entsprechend flexibel entweder über den gesamten Umfang der Umlenkeinrichtung oder nur partiell erfolgt. Durch die Gasströmung können die während des Schweißverfahrens auftretenden Störfaktoren, wie beispielsweise Schweißspritzer oder Rauch, weggeblasen werden, wodurch eine Verschmutzung der Umlenkeinrichtung verhindert werden kann.

In einer bevorzugten Ausführungsform wird der Laserstrahl durch die Umlenkeinrichtung derart abgelenkt, dass er höhenversetzt zur Umlenkeinrichtung auf dem Werkstück positioniert wird. Entsprechend ist eine Ablenkung des Laserstrahls möglich, die entweder kleiner oder größer 90° ist. Dies hat den Vorteil, dass der Bearbeitungsbereich am Werkstück im Wesentlichen von der Umlenkeinheit getrennt wird und dadurch eine Verschmutzung der Umlenkeinrichtung verhindert bzw. verzögert werden kann, so dass sowohl die Materialkosten als auch Maschinenstandzeiten und damit die gesamten Produktionskosten verringert werden können.

Vorzugsweise weist die Umlenkeinheit eine Form auf, welche eine Totalreflexion des Laserstrahls ermöglicht. Derartige Formen wären beispielsweise ein ringförmiger Kegelspiegel oder ein optisches Prisma, wobei auch die Form des Prismas entsprechend der gewünschten Ablenkung des Laserstrahls variiert werden kann.

In einer besonders vorteilhaften Ausführungsform ist vorgesehen, dass mindestens ein Schutzglas zwischen der Umlenkeinrichtung und dem Werkstück vorgesehen ist, wodurch der Bearbeitungsbereich am Werkstück vollständig von der Umlenkeinheit abgetrennt wird, und dadurch eine Verschmutzung auf der Umlenkeinheit während des Schweißprozesses nicht nur verzögert, sondern verhindert werden kann. Vorzugsweise verläuft das Schutzglas im Wesentlichen in einer Ebene senkrecht zu der Rotationssymmetrieachse des Werkstücks, wobei die räumliche Anbringung des Schutzglases variabel ist und sowohl unter, als auch über der Umlenkeinrichtung möglich ist. Das Schutzglas kann unterschiedliche Ausführungsformen aufweisen, beispielsweise ist es möglich, dass durch das Schutzglas die Umlenkeinheit vollständig vom Werkstück abgetrennt, unter der Umlenkeinheit, aber über dem Werkstück verläuft. In einer alternativen Ausführungsform kann das Schutzglas um das Werkstück herum verlaufen, so dass das Werkstück, unabhängig von seiner Länge, an jeder beliebigen Stelle bearbeitet werden kann.

Besonders vorteilhaft kann der Laserstrahl ein kontinuierlicher Laserstrahl sein, wodurch Werkstücke mit beliebigem Umfang geschweißt werden können. Ferner können, aufgrund einer höheren Laserstrahlqualität, einer höheren Laserleistung und einer Verwendung von neuen Lasertechnologien, wie beispielsweise Scheiben- und Faserlasern, neue Nahtformen und beliebige Schweißtiefen ermöglicht werden, die zur Produkt- und Prozessoptimierung führen. Durch den Einsatz eines kontinuierlich betriebenen Lasers ist es ferner möglich, die von der Bestrahlungszeit abhängige Einschweißtiefe, die von der Laserstrahlstrahlqualität abhängige Nahtgeometrie und die an die Werkstückart und -geometrie angepasste Schweißzeit zu variieren, so dass auch Werkstoffkombinationen mit einem hohen Energiebedarf geschweißt werden können.

Vorzugsweise ist die Umlenkeinrichtung teilweise oder vollständig von einer Verkleidung umgeben, wodurch eine Verschmutzung der Umlenkeinheit weiter verhindert werden kann. Die Verkleidung kann dabei aus verschiedenen transparenten oder nicht transparenten Materialien, wie beispielsweise Edelstahl, Glas oder Kunststoff sein. Vorteilhaft weist die Verkleidung einen Ringspalt auf, durch den der Laserstrahl passieren kann. Um Verschmutzungen auf der Umlenkeinrichtung durch den Ringspalt zu verhindern, kann eine Gasströmung erzeugt werden, welche besonders vorteilhaft ab der Umlenkeinheit parallel zur Laserstrahlung zum Werkstück verläuft. Durch diese Gasströmung werden störende Schmutzpartikel, welche eventuell vom Werkstück zur Umlenkeinheit fliegen, unmittelbar in ihrer Flugbahn gestört, umgelenkt oder abgebremst, so dass sie den Laserstrahl nicht stören können.

In einer bevorzugten Ausführungsform sind optische Mittel zur Strahlpositionierung und/oder Fokusverschiebung des Laserstrahls vorgesehen. Vorzugsweise kann eine Relativbewegung zwischen dem Werkstück und dem Laserstrahl mit einem Scanner realisiert werden, wobei zwei Achsen die Strahlablenkung innerhalb der Bearbeitungsebene realisieren und eine dritte Achse eine Verschiebung der Strahlfokusposition ermöglicht. Ein dreidimensionaler Scanner bietet ferner die Möglichkeit, das Werkstück mit einem defokussiertem Laserstrahl als Vor- und/oder Nachwärmprozess zu bearbeiten, wodurch eventuell auftretende Rissspannungen und/oder ein Werkstückverzug reduziert werden können. Des Weiteren kann auch eine Bearbeitung mit einer vergrößerten Spotgeometrie erfolgen, wodurch die Schweißnahtoberfläche des Werkstückes besser homogenisiert werden kann. Auf diese Weise verfügt die Schweißnahtoberfläche über einen geringeren Schweißnahteinfall und einen geringeren Kantenwinkel, wodurch einerseits die Schweißnaht optisch verbessert wird, andererseits aber auch die Weiterverarbeitung, wie beispielsweise eine Lackierung oder Beschichtung des Werkstückes, optimiert, bzw. vereinfacht werden kann. Aufgrund der flacheren Kanten hält die aufgetragene Lackfarbe, bzw. die Beschichtung besser und das Werkstück wird resistenter, beispielsweise gegen Korrosion.

Die Erfindung betrifft ferner ein Verfahren zum Schweißen eines rotationssymmetrischen Werkstücks mit einem Laserstrahl mit einer Vorrichtung zum Laserschweißen, die insbesondere, wie vorstehend beschrieben, aus- und weitergebildet sein kann. Das Verfahren kann insbesondere wie vorstehend anhand der Vorrichtung zum Laserschweißen erläutert, aus- und weitergebildet sein.

Weitere Vorteile und vorteilhafte Ausgestaltungen des erfindungsgemäßen Gegenstandes sind der Beschreibung, der Zeichnung und den Patentansprüchen zu entnehmen.

### Kurze Beschreibung der Zeichnungen

Nachfolgend wird die Erfindung unter Bezugnahme auf die anliegenden Zeichnungen anhand eines bevorzugten Ausführungsbeispiels näher erläutert. Dabei ist zu beachten, dass die Figuren nur beschreibenden Charakter haben und nicht dazu gedacht sind, die Erfindung in irgendeiner Form einzuschränken. Es zeigen:
- Fig. 1: eine schematische perspektivische Ansicht einer Vorrichtung zum Laserschweißen aus dem Stand der Technik,
- Fig. 2a: eine schematische perspektivische Ansicht der erfindungsgemäßen Vorrichtung zum Laserschweißen mit einer einseitigen Gasströmung;
- Fig. 2b: eine schematische perspektivische Ansicht der erfindungsgemäßen Vorrichtung zum Laserschweißen mit einer aufgeweiteten Ringspalte und einem vollständig geöffnetem Gaszufuhrkanal;
- Fig. 2c: eine schematische perspektivische Ansicht der erfindungsgemäßen Vorrichtung aus Fig. 2b mit einer geneigten Ringspalte und einem geschlossenen Teilbereich des Gaszufuhrkanals;
- Fig. 3a: eine schematische perspektivische Ansicht der erfindungsgemäßen Vorrichtung zum Laserschweißen mit einem Schutzglas, einer Verkleidung der Umlenkeinheit und einem umlaufenden Ringspalt;
- Fig. 3b: einen schematischen Querschnitt eines Teilbereiches der in Fig. 3a dargestellten Vorrichtung;
- Fig. 4a: eine schematische perspektivische Ansicht der erfindungsgemäßen Vorrichtung zum Laserschweißen mit einem ringförmigen Schutzglas einer Verkleidung der Umlenkeinheit und einem umlaufenden Ringspalt;
- Fig. 4b: einen schematischen Querschnitt eines Teilbereiches der in Fig. 4a dargestellten Vorrichtung;
- Fig. 5a: eine schematische perspektivische Ansicht der erfindungsgemäßen Vorrichtung zum Laserschweißen mit einer Verkleidung der Umlenkeinheit, einem umlaufenden Ringspalt und einem Scanner;
- Fig. 5b: einen schematischen Querschnitt eines Teilbereiches der in Fig. 5a dargestellten Vorrichtung;
- Fig. 6a: einen schematischen Querschnitt einer Umlenkeinheit mit einer unterhalb der Umlenkeinheit liegenden Gaszuführung;
- Fig. 6b: einen schematischen Querschnitt einer erfindungsgemäßen Vorrichtung mit einem Prisma als Umlenkeinheit und einer oberhalb der Umlenkeinheit liegenden Gaszuführung;

### Beschreibung der Abbildung

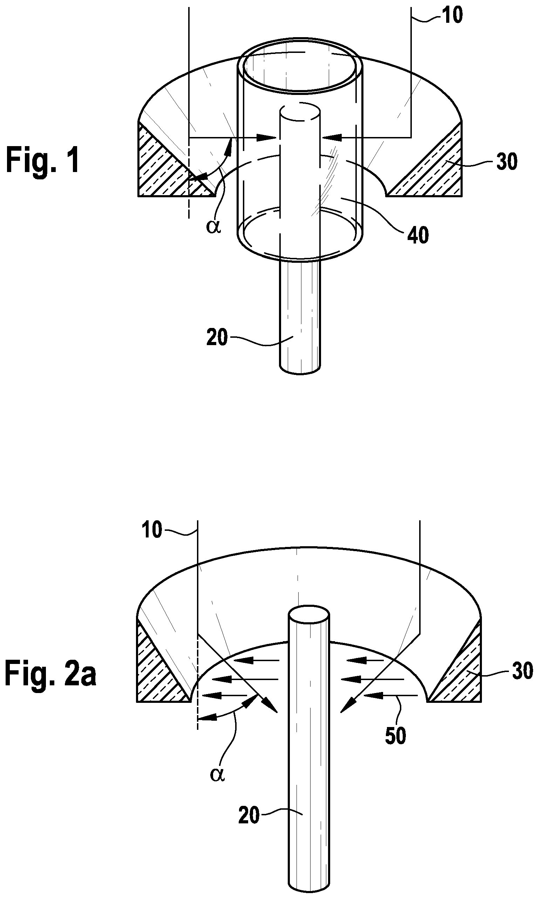

Figur 1 zeigt eine Vorrichtung zum Bearbeiten und/oder Schweißen eines rotationssymmetrischen Werkstücks 20 mit einem Laserstrahl 10, wie sie aus dem Stand der Technik bekannt ist. Dabei wird das Werkstück 20 mit dem Laserstrahl 10, der über eine Umlenkeinheit 30 abgelenkt wird, bearbeitet. Um die Umlenkeinheit 30 vor beispielsweise Staub, Plasma, Rauch oder Schweißspritzer während des Schweißprozesses zu schützen, ist ein Schutzfenster 40 zwischen dem Werkstück 20 und der Umlenkeinheit 30 vorgesehen. Während des Schweißprozesses wird der Laserstrahl 10 an der Umlenkeinheit 30 abgelenkt, wobei die Ablenkung α im Wesentlichen 90 ° beträgt, so dass der Laserstrahl 10 das Schutzfenster 40 senkrecht durchläuft und das Werkstück 20 genau in Höhe der Umlenkeinheit 30 bearbeitet.

Figur 2a zeigt eine erfindungsgemäße Vorrichtung zum Schweißen eines rotationssymmetrischen Werkstücks 20 mit einem Laserstrahl 10. Durch die dargestellte ringförmige Umlenkeinheit 30 wird der Laserstrahl 10 derart abgelenkt, dass die Ablenkung α kleiner als 90 ° ist, so dass die Positionierung des Laserstahls 10 auf dem Werkstück 20 nicht, wie in Figur 1, auf Höhe der Umlenkeinheit 30, sondern unterhalb der Umlenkeinheit 30 liegt. In den Bereich zwischen der Umlenkeinheit 30 und dem Werkstück 20 wird erfindungsgemäß eine Gasströmung 50 zugeführt, die bewirkt, dass während des Schweißprozesses entstehende Schweißpartikel und/oder auftretender Rauch von der Umlenkeinheit 30 und dem Werkstück 20 weggeblasen werden können, wodurch eine Verschmutzung der Umlenkeinheit 30 oder eine Störung des Laserstrahls 10 verhindert werden kann. Die Gasströmung 50 kann auf verschiedene Art und Weise zugeführt werden. Im einfachsten Fall, wie in Fig. 2a gezeigt, erfolgt die Zufuhr über eine zusätzliche, nicht dargestellte Vorrichtung und unabhängig von der Umlenkeinheit 30.

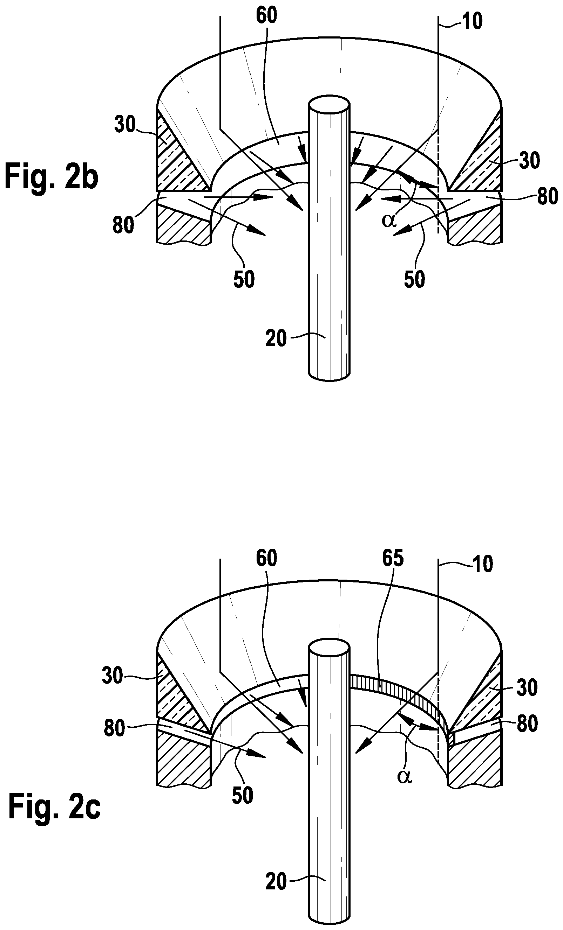

Im Gegensatz zu der in Fig. 2a gezeigten, einseitigen Gasströmung 50 ist auch eine radiale Gasströmung 50, wie in Fig. 2b dargestellt, möglich. Auch diese Gasströmung 50 bewirkt, dass die während eines Schweißprozesses entstehenden Störpartikel und/oder der auftretende Rauch von der Umlenkeinheit 30 weggeblasen werden. In den Fig. 2b und 2c erfolgt die Gaszuführung über einen in die Umlenkeinheit 30 integrierten Gaszufuhrkanal 80, der, wie in Fig. 2b dargestellt, über den gesamten Umfang der Umlenkeinheit 30 verläuft und, wie in Fig. 2c dargestellt, einen geschlossenen Teilbereich 65 und einen offenen Teilbereich 60 aufweisen kann. Ferner ist es möglich, dass der Gaszufuhrkanal 80 in Strömungsrichtung eine Aufweitung, wie in Fig. 2b dargestellt, aufweist und/oder horizontal oder geneigt, wie in Fig. 2c dargestellt, verläuft. Auf diese Weise kann die Gasströmung 50, wie in den Fig. 2b und 2c dargestellt, in verschiedenen Strömungswinkeln aus dem Gaszufuhrkanal 80 austreten und variabel an das jeweilige Werkstück 20 oder die Umlenkeinheit 30 angepasst werden. Je nach Vorrichtung kann die Umlenkeinheit 30 mehrere geschlossene Teilbereiche 65 und mehrere offene Teilbereiche 60 aufweisen, so dass die Gasströmung 50 über den gesamten Umfang der Umlenkeinheit 30 verteilt variabel eingesetzt werden kann. Auf diese Weise kann die Gasströmung 50 über den Gaszufuhrkanal 80 entweder über den gesamten Umfang gleichmäßig oder individuell angepasst partiell erfolgen.

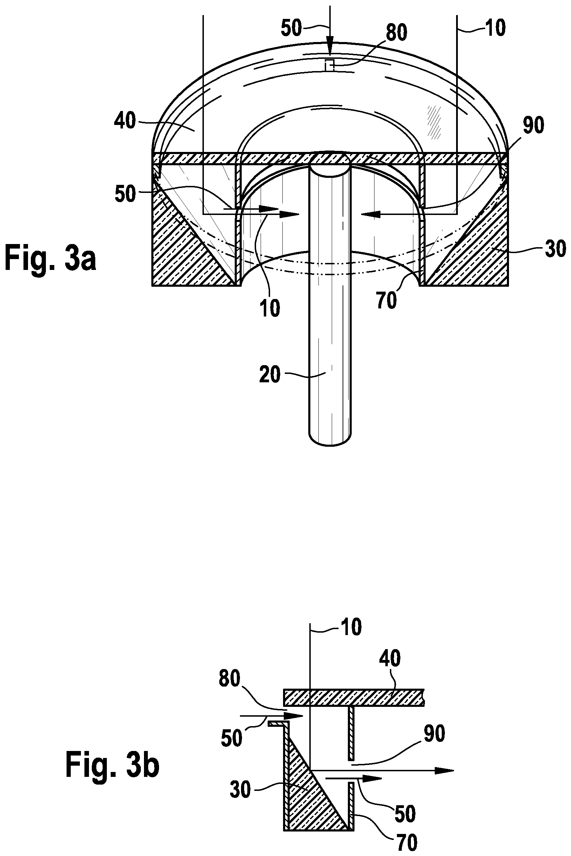

Figur 3a zeigt eine erfindungsgemäße Vorrichtung mit einer Kombination aus einem durchgängigen Schutzglas 40 und Gasströmung 50. Dabei weist die Umlenkeinheit 30 auf der Innenseite eine Verkleidung 70 und oberhalb, als eine Art Deckel, ein Schutzglas 40 auf. Der optische Weg des Laserstrahls 10 verläuft durch das transparente Schutzglas 40 hindurch auf die Umlenkeinheit 30 und wird im dargestellten Ausführungsbeispiel im Wesentlichen senkrecht abgelenkt. Die Ablenkung α ist abhängig von der Ausführungsform der Umlenkeinheit 30, welche variabel wählbar ist und an den jeweiligen Schweißprozess angepasst werden kann. Das dargestellte Schutzglas 40 verläuft im Wesentlichen horizontal, wobei durch die erfindungsgemäße Vorrichtung und eine neue Auslegung des Schutzglases 40 möglich ist. So kann das Schutzglas 40, wie in der Figur 1 dargestellt, vertikal verlaufen oder horizontal unterhalb der Umlenkeinheit 30 angebracht werden, wodurch das Werkstück 20 und auch die Bearbeitungszone räumlich vollständig durch das Schutzglas 40 von der Umlenkeinheit 30 getrennt werden, so dass sich während des Schweißvorgangs auftretende Partikel, wie beispielsweise Rauchpartikel oder Schweißspritzer, nicht unmittelbar auf der Umlenkeinheit 30 niederschlagen können. Aufgrund dieser Verlagerung der Bearbeitungszone unter oder über die Umlenkeinrichtung 30 können Werkstücke 20 mit verschiedenen Dimensionen bearbeitet werden. So kann beispielsweise bei einem längeren Werkstück 20 eine Umlenkeinheit 30 verwenden werden, bei der die Ablenkung α derart klein ausfällt, dass der Laserstrahl 10 entsprechend weit unterhalb der Umlenkeinheit 30 auf dem Werkstück 20 positioniert wird. Des Weiteren ist es möglich, dass die Form und Größe der Umlenkeinheit 30 selbst variiert, wodurch auch die Ablenkung α variieren kann. Abhängig von dem zu bearbeitenden Werkstück 20 kann entsprechend die gesamte Vorrichtung in ihrer Größe angepasst werden, wobei es bei einer Verkleinerung der Vorrichtung möglich ist, die Angriffsfläche auf den relevanten Bereich der Umlenkeinheit 30 zu verringern.

Die Verkleidung 70 weist einen Ringspalt 90 auf, so dass der umgelenkte Laserstrahl 10 die Verkleidung 70 ungehindert passieren und auf dem Werkstück 20 positioniert werden kann. Dabei sei anzumerken, dass die Verkleidung 70 vorzugsweise aus Edelstahl besteht, aber jedes beliebige Material, transparent oder undurchsichtig, verwendet werden kann. Um Verschmutzungen, die sich durch den Ringspalt 90 hindurch auf der Umlenkeinheit 30 niederschlagen können, zu verhindern, wird eine Gasströmung 50 erzeugt, die, wie in Fig. 3b verdeutlicht, über einen Gaszufuhrkanal 80 zugeführt und über den Ringspalt 90 wieder abgeführt wird. Durch die Gaszufuhr über den Gaszufuhrkanal 80 entsteht in dem Bereich zwischen dem Schutzglas 40, der Umlenkeinheit 30 und der Verkleidung 70 ein Überdruck, welcher durch den Ringspalt 90 als Gasströmung 50 entweicht. Die Gasströmung 50 verläuft somit ab der Umlenkeinheit 30 parallel zum Laserstrahl 10. Durch die Gasströmung 50 werden Störpartikel, welche während eines Schweißprozesses vom Werkstück 20 zur Umlenkeinheit 30 fliegen könnten, in ihrer Flugbahn gestört, umgelenkt oder abgebremst, so dass eine Verschmutzung der Umlenkeinheit 30 während des Schweißprozesses verhindert werden kann.

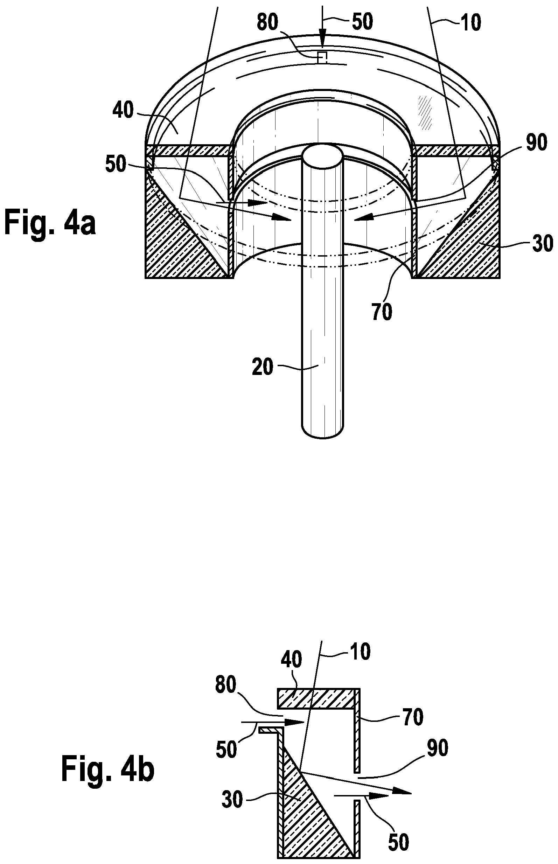

Der Aufbau der in Figur 4a und 4b dargestellten erfindungsgemäßen Vorrichtung entspricht im Wesentlichen dem Aufbau und Prinzip der in Fig. 3a und Fig. 3b dargestellten Vorrichtung mit dem Unterschied, dass das Schutzglas 40 keine durchgehende Scheibe sondern ein Ring ist und die Ablenkung α des Laserstrahls durch die Umlenkeinheit 30 weniger als 90° beträgt, wobei grundsätzlich auch Ablenkungen α von mehr als 90° und/oder genau 90° möglich sind. Das ringförmige Schutzglas 40 dichtet ebenfalls den Innenraum zwischen dem Schutzglas 40, der Umlenkeinheit 30 und der Verkleidung 70 ab, damit ein Überdruck aufgebaut werden kann. Zusätzlich werden durch das ringförmige Schutzglas 40 aber weitere Vorteile in der Werkstückpositionierung ermöglicht. So können beispielsweise lange Werkstücke 20 durch die ringförmige Öffnung des Schutzglases 40 hindurch nach oben erstreckt und bearbeitet werden.

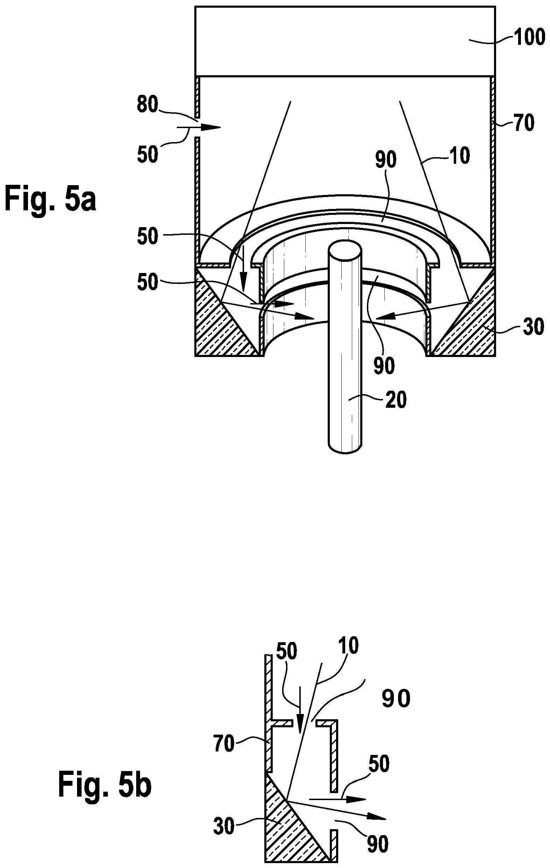

Wie in den Figuren 5a und 5b dargestellt, ist es auch möglich, die Umlenkeinheit 30 mit einer rundum Verkleidung 70 ohne Schutzglas zu versehen. Um ein Passieren des Laserstrahls 10 weiterhin zu gewährleisten, weist die Verkleidung 70 neben dem Ringspalt 90 auf der Innenseite der Verkleidung einen weiteren Ringspalt 90 oberhalb der Umlenkeinheit 30 auf. Ferner weist die Vorrichtung einen Scanner 100 auf, der entweder direkt mit der Verkleidung 70 verbunden oder unmittelbar in diese integriert ist. Auf diese Weise kann gewährleistet werden, dass die Vorrichtung in sich geschlossen ist und über den Gaszufuhrkanal 80 in der Verkleidung 70 ein Überdruck innerhalb der Verkleidung 70 zwischen dem Scanner 100 und der Umlenkeinheit 30 aufgebaut werden kann. Entsprechend kann über den Gaszufuhrkanal 80 die erfindungsgemäße Gasströmung 50 zugeführt werden, welche durch den oberen Ringspalt 90 hindurch an der Umlenkeinheit 30 vorbei und durch den unteren Ringspalt 90 auf der Innenseite der Verkleidung 70 hinausströmt und auf diese Weise verhindert, dass Störpartikel durch den Ringspalt 90 eindringen können.

Sowohl das Schutzglas 40 als auch die Gasströmung 50 und/oder die Verkleidung 70 kann an die Ablenkung α des Laserstrahls 10, bzw. an das zu bearbeitende Werkstück 20 angepasst werden. Grundsätzlich sind verschiedene Ausführungsvarianten des Schutzglases 40, der Umlenkeinheit 30, der Verkleidung 70 oder des Gaszufuhrkanals 80 möglich, so dass die Gasströmung 50 individuell an die Vorrichtung angepasst und zugeführt werden kann.

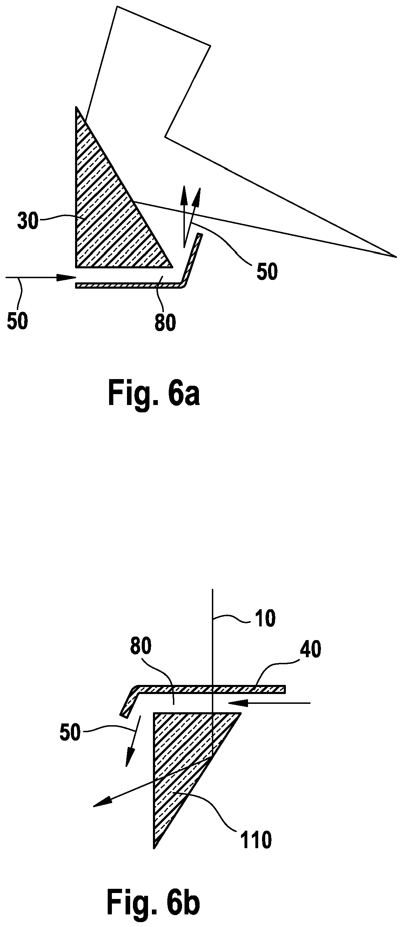

Figur 6a zeigt einen Detailbereich einer erfindungsgemäßen Vorrichtung, wobei sich der Gaszufuhrkanal 80 unmittelbar unterhalb der Umlenkeinheit 30 befindet. Auf diese Weise ist eine optimierte Gasströmung 50 möglich. Durch eine gezielte Postionierung der Gasströmung 50 unmittelbar auf die Umlenkeinheit 30 kann der Bereich der Laserstrahlumlenkung besser geschützt und störende Partikel können direkt weggeblasen bzw. abgelenkt werden.

Figur 6b zeigt eine erfindungsgemäße Vorrichtung mit einem Prisma 110 als Umlenkeinheit und einer optimierten Gasströmung 50, wobei der Gaszufuhrkanal 80 oberhalb des Prismas 110 unmittelbar durch das transparente Schutzglas 40 ausgebildet ist und durch die Gasströmung 50 störende Partikel von der Umlenkeinheit nach unten geblasen werden können. Durch das optische Prisma 110 wird der Laserstrahl 10 in Form einer Totalreflexion an der verspiegelten Fläche, der Hypotenuse, abgelenkt. Um die Montage und Justierung zu vereinfachen, werden besonders bevorzugt Pentagonprismen eingesetzt, da diese gegenüber geringfügigen Änderungen des Einfallswinkels unempfindlich sind.

## Patentansprüche

1. Vorrichtung zum Laserschweißen eines rotationssymmetrischen Werkstücks (20) mit einem Laserstrahl (10), umfassend eine Umlenkeinrichtung (30), die für einen im Wesentlichen in einer Ebene senkrecht zu der Rotationssymmetrieachse des Werkstücks (20) liegenden Verlauf ringförmig um das Werkstück (20) herum eingerichtet ist,
wobei
der Laserstrahl (10) als kontinuierlicher Laserstrahl ausgebildet ist **dadurch gekennzeichnet, dass** die Vorrichtung für ein Zuführen einer Gasströmung (50) in den sich bei einem solchen Verlauf der Umlenkeinrichtung (30) um das Werkstück (20) herum ergebenden Bereich zwischen der Umlenkeinheit (30) und dem Werkstück (20) eingerichtet ist.

2. Vorrichtung nach Anspruch 1, **dadurch gekennzeichnet, dass** die Gasströmung (50) über mindestens einen Gaszufuhrkanal (80) zuführbar ist.

3. Vorrichtung nach Anspruch 2, **dadurch gekennzeichnet, dass** sich der Gaszufuhrkanal (80) in Strömungsrichtung aufweitet.

4. Vorrichtung nach Anspruch 2 oder 3, **dadurch gekennzeichnet, dass** die Gasströmung (50) in einem variablen Strömungswinkel aus dem Gaszufuhrkanal (80) austreten kann.

5. Vorrichtung nach einem der Ansprüche 1 bis 4, **dadurch gekennzeichnet, dass** der Gaszufuhrkanal (80) über den gesamten Umfang der Umlenkeinheit (30) verläuft und dabei offene Teilbereiche (60) und/oder geschlossene Teilbereiche (65) aufweisen kann.

6. Vorrichtung nach einem der Ansprüche 1 bis 5, **dadurch gekennzeichnet, dass** der Gaszufuhrkanal (80) unterhalb und/oder oberhalb der Umlenkeinrichtung (30) verläuft und/oder in die Umlenkeinrichtung (30) integriert ist.

7. Vorrichtung nach einem der vorherigen Ansprüche, **dadurch gekennzeichnet, dass** die Umlenkeinrichtung (30) derart geformt ist, dass der Laserstrahl (10) derart abgelenkt wird, dass er höhenversetzt zur Umlenkeinrichtung (30) auf dem Werkstück (20) positioniert wird.

8. Vorrichtung nach einem der vorherigen Ansprüche, **dadurch gekennzeichnet, dass** die Umlenkeinrichtung (30) eine Form aufweist, wie beispielsweise die Form eines ringförmigen Kegelspiegels oder eines ringförmigen optischen Prismas, welche eine Totalreflexion des Laserstrahls (10) ermöglicht.

9. Vorrichtung nach einem der vorherigen Ansprüche, **dadurch gekennzeichnet, dass** mindestens ein Schutzglas (40) zwischen der Umlenkeinrichtung (30) und dem Werkstück (20) vorgesehen ist.

10. Vorrichtung nach Anspruch 9, **dadurch gekennzeichnet, dass** das Schutzglas (40) im Wesentlichen in einer Ebene senkrecht zu der Rotationssymmetrieachse des Werkstücks (20) verläuft.

11. Vorrichtung nach Anspruch 9 oder 10, **dadurch gekennzeichnet, dass** das Schutzglas (40) unterhalb und/oder oberhalb der Umlenkeinrichtung (30) vorgesehen ist.

12. Vorrichtung nach einem der Ansprüche 9 bis 11, **dadurch gekennzeichnet, dass** das Schutzglas (40) für eine Anordnung oberhalb des Werkstückes (20) vorgesehen ist.

13. Vorrichtung nach einem der Ansprüche 9 bis 12, **dadurch gekennzeichnet, dass** das Schutzglas (40) für einen Verlauf um das Werkstück (20) herum eingerichtet ist.

14. Vorrichtung nach einem der vorherigen Ansprüche, **dadurch gekennzeichnet, dass** die Umlenkeinrichtung (30) teilweise oder vollständig von einer Verkleidung (70) umgeben ist.

15. Vorrichtung nach Anspruch 13, **dadurch gekennzeichnet, dass** die Verkleidung (70) einen Ringspalt (90) aufweist.

16. Vorrichtung nach einem der vorherigen Ansprüche, **dadurch gekennzeichnet, dass** optische Mittel zur Strahlpositionierung und/oder Fokusverschiebung des Laserstrahls (20) vorgesehen sind.

17. Vorrichtung nach einem der vorherigen Ansprüche, **dadurch gekennzeichnet, dass** mit einem Scanner (100) die Relativbewegung zwischen dem Werkstück (20) und dem Laserstrahl (10) zwei und/oder dreidimensional realisiert werden kann.

18. Verfahren zum Laserschweißen eines rotationssymmetrischen Werkstücks (20) mit einem Laserstrahl (10), mittels einer Vorrichtung nach einem der Ansprüche 1 bis 17, bei dem der Laserstrahl (10) auf seinem optischen Weg zum Werkstück (20) mindestens eine Umlenkeinrichtung (30) durchläuft, wobei
die Umlenkeinrichtung (30) im Wesentlichen in einer Ebene senkrecht zu der Rotationssymmetrieachse des Werkstücks (20) und ringförmig um das Werkstück (20) herum verläuft,
wobei
der Laserstrahl (10) als kontinuierlicher Laserstrahl ausgebildet ist und dass in den Bereich zwischen der Umlenkeinheit (30) und dem Werkstück (20) eine Gasströmung (50) zugeführt wird.

## Claims

1. Device for laser welding a rotation-symmetric workpiece (20) with a laser beam (10), comprising a deflecting unit (30), which is designed for running substantially in a plane perpendicular to the axis of rotation symmetry of the workpiece (20) in an annular manner around the workpiece (20),
wherein the laser beam (10) is formed as a continuous laser beam,
**characterized in that** the device is designed for feeding a gas flow (50) into the region between the deflecting unit (30) and the workpiece (20) that is produced when the deflecting unit (30) runs in such a way around the workpiece (20).

2. Device according to Claim 1, **characterized in that**
the gas flow (50) can be fed by way of at least one gas feed channel (80).

3. Device according to Claim 2, **characterized in that**
the gas feed channel (80) widens in the direction of flow.

4. Device according to Claim 2 or 3, **characterized in**
**that** the gas flow (50) can emerge from the gas feed channel (80) in a variable flow angle.

5. Device according to one of Claims 1 to 4,
**characterized in that** the gas feed channel (80) runs over the entire circumference of the deflecting unit (30) and may in this case have open subregions (60) and/or closed subregions (65).

6. Device according to one of Claims 1 to 5,
**characterized in that** the gas feed channel (80) runs below and/or above the deflecting unit (30) and/or is integrated in the deflecting unit (30).

7. Device according to one of the preceding claims,
**characterized in that** the deflecting unit (30) is formed in such a way that the laser beam (10) is diverted in such a way that it is positioned on the workpiece (20) offset in height in relation to the deflecting unit (30).

8. Device according to one of the preceding claims,
**characterized in that** the deflecting unit (30) has a form, such as for example the form of an annular cone mirror or an annular optical prism, that makes a total reflection of the laser beam (10) possible.

9. Device according to one of the preceding claims,
**characterized in that** at least one protective glass (40) is provided between the deflecting unit (30) and the workpiece (20).

10. Device according to Claim 9, **characterized in that**
the protective glass (40) runs substantially in a plane perpendicular to the axis of rotation symmetry of the workpiece (20).

11. Device according to Claim 9 or 10, **characterized in that** the protective glass (40) is provided below and/or above the deflecting unit (30).

12. Device according to one of Claims 9 to 11,
**characterized in that** the protective glass (40) is intended for an arrangement above the workpiece (20).

13. Device according to one of Claims 9 to 12,
**characterized in that** the protective glass (40) is designed for running around the workpiece (20).

14. Device according to one of the preceding claims,
**characterized in that** the deflecting unit (30) is partially or completely surrounded by a cladding (70).

15. Device according to Claim 13, **characterized in that**
the cladding (70) has an annular gap (90).

16. Device according to one of the preceding claims,
**characterized in that** optical means for beam positioning and/or focal shifting of the laser beam (20) are provided.

17. Device according to one of the preceding claims,
**characterized in that** the relative movement between the workpiece (20) and the laser beam (10) can be realized two-dimensionally and/or three-dimensionally with a scanner (100).

18. Method for laser welding a rotation-symmetric workpiece (20) with a laser beam (10), by means of a device according to one of Claims 1 to 17, in which the laser beam (10) passes through at least one deflecting unit (30) on its optical path to the workpiece (20), wherein the deflecting unit (30) runs substantially in a plane perpendicular to the axis of rotation symmetry of the workpiece (20) and in an annular manner around the workpiece (20), wherein the laser beam (10) is formed as a continuous laser beam and that a gas flow (50) is fed into the region between the deflecting unit (30) and the workpiece (20).

## Revendications

1. Dispositif pour souder au laser une pièce à usiner symétrique de rotation (20) au moyen d'un faisceau laser (10), comprenant
un dispositif de déviation (30), qui est agencé de manière annulaire autour de la pièce à usiner (20) afin de s'étendre sensiblement dans un plan perpendiculaire à l'axe de symétrie de rotation de la pièce à usiner (20),
dans lequel le faisceau laser (10) est réalisé sous la forme d'un faisceau laser continu,
**caractérisé en ce que** le dispositif est conçu pour l'introduction d'un écoulement de gaz (50) dans la région qui résulte de cette extension du dispositif de déviation (30) autour de la pièce à usiner (20) entre l'unité de déviation (30) et la pièce à usiner (20).

2. Dispositif selon la revendication 1,
**caractérisé en ce que** l'écoulement de gaz (50) peut être introduit par l'intermédiaire d'au moins un canal d'introduction de gaz (80).

3. Dispositif selon la revendication 2,
**caractérisé en ce que** se le canal d'introduction de gaz (80) s'élargit dans la direction d'écoulement.

4. Dispositif selon la revendication 2 ou 3,
**caractérisé en ce que** l'écoulement de gaz (50) peut sortir du canal d'introduction de gaz (80) sous un angle d'écoulement variable.

5. Dispositif selon l'une quelconque des revendications 1 à 4, **caractérisé en ce que** le canal d'introduction de gaz (80) s'étend sur la totalité de la circonférence de l'unité de déviation (30) et peut ainsi comporter des sections ouvertes (60) et/ou des sections fermées (65).

6. Dispositif selon l'une quelconque des revendications 1 à 5, **caractérisé en ce que** le canal d'introduction de gaz (80) s'étend en-dessous et/ou au-dessus du dispositif de déviation (30) et/ou est intégré au dispositif de déviation (30).

7. Dispositif selon l'une quelconque des revendications précédentes, **caractérisé en ce que** le dispositif de déviation (30) est formé de manière à ce que le faisceau laser (10) soit dévié afin qu'il soit positionné sur la pièce à usiner (20) de manière décalée en hauteur par rapport au dispositif de déviation (30).

8. Dispositif selon l'une quelconque des revendications précédentes, **caractérisé en ce que** le dispositif de déviation (30) présente une forme, comme par exemple la forme d'un miroir conique annulaire ou d'un prisme optique annulaire, qui permet une réflexion totale du faisceau laser (10).

9. Dispositif selon l'une quelconque des revendications précédentes, **caractérisé en ce qu'**il est prévu au moins une verre protecteur (40) entre le dispositif de déviation (30) et la pièce à usiner (20).

10. Dispositif selon la revendication 9,
**caractérisé en ce que** le verre protecteur (40) s'étend sensiblement dans un plan perpendiculaire à l'axe de symétrie de rotation de la pièce à usiner (20).

11. Dispositif selon la revendication 9 ou 10,
**caractérisé en ce que** le verre protecteur (40) est prévu en-dessous et/ou au-dessus du dispositif de déviation (30).

12. Dispositif selon l'une quelconque des revendications 9 à 11, **caractérisé en ce que** le verre protecteur (40) est prévu pour un agencement au-dessus de la pièce à usiner (20).

13. Dispositif selon l'une quelconque des revendications 9 à 12, **caractérisé en ce que** le verre protecteur (40) est agencé de manière à s'étendre autour de la pièce à usiner (20).

14. Dispositif selon l'une quelconque des revendications précédentes, **caractérisé en ce que** le dispositif de déviation (30) est partiellement ou entièrement entouré d'un revêtement (70).

15. Dispositif selon la revendication 13, **caractérisé en ce que** le revêtement (70) comporte une fente annulaire (90).

16. Dispositif selon l'une quelconque des revendications précédentes, **caractérisé en ce qu'**il est prévu des moyens optiques pour le positionnement du faisceau et/ou pour le décalage du foyer du faisceau laser (20).

17. Dispositif selon l'une quelconque des revendications précédentes, **caractérisé en ce que** le mouvement relatif entre la pièce à usiner (20) et le faisceau laser (10) peut être réalisé de manière bi-et/ou tridimensionnelle au moyen d'un dispositif de balayage (100).

18. Procédé pour souder au laser une pièce à usiner symétrique de rotation (20), comportant un faisceau laser (10), au moyen d'un dispositif selon l'une quelconque des revendications 1 à 17, dans lequel le faisceau laser (10) passe à travers au moins un dispositif de déviation (30) sur son chemin optique vers la pièce à usiner (20), dans lequel le dispositif de déviation (30) s'étend sensiblement dans un plan perpendiculaire à l'axe de symétrie de rotation de la pièce à usiner (20) et de manière annulaire autour de la pièce à usiner (20),
dans lequel le faisceau laser (10) est réalisé sous la forme d'un faisceau laser continu et en ce qu'un écoulement de gaz (50) est introduit dans le région située entre l'unité de déviation (30) et la pièce à usiner (20).
